# EUROPEAN PATENT APPLICATION

(11) **EP 4 685 962 A1**
(43) Date of publication of application: **28.01.2026**
(21) Application number: 24190018.2
(22) Date of filing: 22.07.2024
(51) Int. Cl.: H01M 50/273, H01M 50/342

(54) **BATTERY CELL AND METHOD FOR MANUFACTURING THEREOF, BATTERY SYSTEM AND ELECTRIC VEHICLE**

(71) Applicant: SAMSUNG SDI CO., LTD., Giheung-gu Yongin-si, Gyeonggi-do 17084 (KR)
(72) Inventor: Reinprecht, Wolfgang, 8144 Attendorf (AT)
(74) Representative: Gulde & Partner

(57) **Abstract**

The present disclosure refers to battery cell (10). The battery cell (10) includes a battery cell housing (12) and a protective cover (20). The battery cell housing (12) has a pair of electrode terminals (14) and a venting valve (16) disposed on a terminal side (18). The protective cover (20) is configured to cover the terminal side (18) and to be folded to further cover two opposite side walls (22) of the battery cell housing (12) extending from the terminal side (18) to an extent of at least 25 percent of the area of each opposite side wall (22). Further, the protective cover (20) has a heat resistance of at least 800°C.

## Description

### Field of the Disclosure

The present disclosure relates to a battery cell and a method for manufacturing the battery cell. Further, the present disclosure relates to a battery system including a plurality of the battery cells as disclosed herein and an electric vehicle including the battery system as disclosed herein.

### Technological Background

Recently, vehicles for transportation of goods and peoples have been developed that use electric power as a source for motion. Such an electric vehicle is an automobile that is propelled permanently or temporarily by an electric motor, using energy stored in rechargeable batteries. An electric vehicle may be solely powered by batteries (Battery Electric Vehicle BEV) or may include a combination of an electric motor and, for example, a conventional combustion engine (Plugin Hybrid Electric Vehicle PHEV). BEVs and PHEVs use high-capacity rechargeable batteries, which are designed to give power for propulsion over sustained periods of time.

Generally, a rechargeable (or secondary) battery cell includes an electrode assembly including a positive electrode, a negative electrode, and a separator interposed between the electrodes. A solid or liquid electrolyte allows movement of ions during charging and discharging of the battery cell. The electrode assembly is located in a casing and electrode terminals, which are positioned on the outside of the casing, establish an electrically conductive connection to the electrodes. The shape of the casing may be, for example, cylindrical or rectangular.

A battery module is formed of a plurality of battery cells connected in series or in parallel. That is, the battery module is formed by interconnecting the electrode terminals of the plurality of battery cells depending on a required amount of power and in order to realize a high-power rechargeable battery.

Battery modules can be constructed in either a block design or in a modular design. In the block design each battery cell is coupled to a common current collector structure and a common battery management system and the unit thereof is arranged in a housing. In the modular design, pluralities of battery cells are connected together to form submodules and several submodules are connected together to form the battery module. In automotive applications, battery systems generally include a plurality of battery modules connected in series for providing a desired voltage.

A battery pack is a set of any number of (for example identical) battery modules or single battery cells. The battery modules, respectively battery cells, may be configured in a series, parallel or a mixture of both to deliver the desired voltage, capacity, and/or power density. Components of a battery pack include the individual battery modules, and the interconnects, which provide electrical conductivity between the battery modules.

The mechanical integration of a battery pack requires appropriate mechanical connections between the individual components, e.g. of battery modules, and between them and a supporting structure of the vehicle. These connections must remain functional and save during the average service life of the battery system. Further, installation space and interchangeability requirements must be met, especially in mobile applications.

Mechanical integration of battery modules may be achieved by providing a carrier framework and by positioning the battery modules thereon. Fixing the battery cells or battery modules may be achieved by fitted depressions in the framework or by mechanical interconnectors such as bolts or screws. Alternatively, the battery modules are confined by fastening side plates to lateral sides of the carrier framework. Further, cover plates may be fixed atop and below the battery modules. The framework is usually made of aluminum or an aluminum alloy to lower the total weight of the construction.

Battery systems according to the prior art, despite any modular structure, usually include a battery housing that serves as enclosure to seal the battery system against the environment and provides structural protection of the battery system's components. Housed battery systems are usually mounted as a whole into their application environment, e.g. an electric vehicle.

Exothermic decomposition of cell components may lead to a so-called thermal runaway. Generally, thermal runaway describes a process that accelerates due to increased temperature, in turn releasing energy that further increases temperature. Thermal runaway occurs in situations when an increase in temperature changes the conditions in a way that causes a further increase in temperature, often leading to a destructive result. In rechargeable battery systems, thermal runaway is associated with strong exothermic reactions that are accelerated by temperature rise. In thermal runaway, the battery cell temperature rises incredibly fast and the energy stored is released very suddenly. In extreme cases, thermal runaway can cause battery cells to explode and start fire. In minor cases, it can cause battery cells to be damaged beyond repair.

When a battery cell is heated above a critical temperature (for example, above 150°C) the battery cell can transition into a thermal runaway. Generally, temperatures outside of the safe region on either the low or high side may lead to irreversible damage to the battery cell and therefore may possible trigger thermal runaway. Thermal runaway may also occur due to an internal or external short circuit of the battery cell or poor battery maintenance. For example, overcharging or rapid charging may lead to thermal runaway.

During thermal runaway, the failed battery cell may reach a temperature exceeding 700°C. Further, large quantities of hot gas are ejected from inside of the failed battery cell through the venting opening of the cell housing into the battery pack. The main components of the vented gas are H₂, CO₂, CO, electrolyte vapor and other hydrocarbons. The vented gas is therefore flammable and potentially toxic. The vented gas also causes a gas-pressure to increase inside the battery pack. The vented gas may heat up the components inside the battery housing such as the other battery cells of the battery pack. For example, particles from the vented gas may deposit onto the battery cells which may lead to thermal propagation and may incite thermal runaway in adjacent battery cells, i.e. leading to an infection of additional (adjacent) battery cells of the battery pack. In the worst case, the high temperatures may thus lead to the process spreading to neighboring cells and fire in the battery pack. At this stage, the fire is hardly to extinguish.

Battery cells or voltage sources are usually insulated with plastic foils for providing a required electrical insulation within the normal operating temperatures of up to 150°C. In case of a malfunction of one or more battery cells or voltage sources, an overheating may occur, i.e. the temperature (significantly) exceeds 150°C, which causes the insulation barrier, i.e. the plastic foil, to melt such that the required electrical resistance may not be provided anymore. The decreased electrical resistance between parts or components with high differential voltage (at least >20V) may then cause internal short circuits and arcing.

It is thus an object of the present invention provide a battery cell which reduces the incidence of a thermal runaway.

### Summary of Invention

The invention is defined by the appended claims. The description that follows is subjected to this limitation. Any disclosure lying outside the scope of the claims is only intended for illustrative as well as comparative purposes.

According to one aspect of the present disclosure, a battery cell is provided including a battery cell housing having a pair of electrode terminals and a venting valve disposed on a terminal side, and a protective cover configured to cover the terminal side and to be folded to further cover two opposite side walls of the battery cell housing extending from the terminal side to an extent of at least 25 percent of the area of each opposite side wall, wherein the protective cover has a heat resistance of at least 800°C.

According to an aspect of the present disclosure, the protective cover is configured to be folded to cover both opposite side walls of the battery cell housing to an extent of at least 50 percent or at least 75 percent of the area of each opposite side wall, or the protective cover is configured to be folded to entirely cover both opposite side walls of the battery cell housing.

According to an aspect of the present disclosure, the battery cell housing has a rectangular (or prismatic) shape and the protective cover is configured to be folded so as to cover short side walls of the battery cell housing.

According to an aspect of the present disclosure, the protective cover is configured to break by venting products exhausted through the venting valve during a thermal runaway of the battery cell.

According to an aspect of the present disclosure, the protective cover includes a weakened portion to facilitate breaking in an area corresponding to the venting valve.

According to an aspect of the present disclosure, the battery cell housing is electrically conductive and the protective cover is electrically insulating.

According to an aspect of the present disclosure, the protective cover is adhered to the battery cell housing.

According to an aspect of the present disclosure, the protective cover includes a self-adhering base layer for adhering the protective cover to the battery cell housing and a protective layer adhered to the base layer.

According to an aspect of the present disclosure, the protective layer includes glass fiber and mica.

According to another aspect of the present disclosure, a battery system is provided including a battery pack with a housing and a plurality of battery cells as disclosed herein stacked along a stacking direction and accommodated within the housing.

According to an aspect of the present disclosure, the battery system further includes a cell spacer arranged between two adjacent battery cells along the stacking direction, wherein the cell spacer is configured to entirely cover the side walls of the adjacent battery cells facing each other along the stacking direction so as to abut the protective cover.

According to an aspect of the present disclosure, the cell spacer is configured to further overlap the protective cover along the stacking direction and/or to extend beyond the protective cover.

According to an aspect of the present disclosure, the terminal sides of the battery cells are arranged to face a first direction orthogonal to the stacking direction and the opposite side walls of the battery cell housings of the battery cells are arranged to face a second direction orthogonal to the first direction and the stacking direction.

Yet another aspect of the present disclosure refers to an electric vehicle including the battery system as disclosed herein.

Yet another aspect of the present disclosure refers to a method for manufacturing a battery cell, wherein the method includes the steps of a) providing a battery cell housing having a pair of electrode terminals and a venting valve disposed on a terminal side of the battery cell, b) disposing a protective cover with a heat resistance of at least 800°C on the terminal side of the battery cell housing, and c) folding two opposite end sections of the protective cover along the edges of the battery cell housing to partially cover two opposite side walls of the battery cell housing extending from the terminal side to an extent of at least 25 percent of the area of each of the opposite side walls.

Further aspects of the present disclosure could be learned from the dependent claims or the following description.

### Brief Description of the Drawings

Features will become apparent to those of ordinary skill in the art by describing in detail exemplary embodiments with reference to the attached drawings in which:
- Fig. 1: illustrates a top view of a battery cell according to an embodiment.
- Fig. 2: illustrates a schematic cross section of a battery system according to an embodiment.
- Fig. 3: illustrates a top view of the battery system of Fig. 2 according to an embodiment.
- Fig. 4: illustrates a schematic flow chart of a method for assembling a battery cell according to an embodiment.

### Detailed Description of the invention

Reference will now be made in detail to embodiments, examples of which are illustrated in the accompanying drawings. Effects and features of the exemplary embodiments, and implementation methods thereof will be described with reference to the accompanying drawings. In the drawings, like reference numerals denote like elements, and redundant descriptions are omitted. The present disclosure, however, may be embodied in various different forms, and should not be construed as being limited to only the illustrated embodiments herein. Rather, these embodiments are provided as examples so that this disclosure will be thorough and complete, and will fully convey the aspects and features of the present disclosure to those skilled in the art.

Accordingly, processes, elements, and techniques that are not considered necessary to those having ordinary skill in the art for a complete understanding of the aspects and features of the present disclosure may not be described. In the drawings, the relative sizes of elements, layers, and regions may be exaggerated for clarity.

As used herein, the term "and/or" includes any and all combinations of one or more of the associated listed items. Further, the use of "may" when describing embodiments of the present disclosure refers to "one or more embodiments of the present disclosure." In the following description of embodiments of the present disclosure, the terms of a singular form may include plural forms unless the context clearly indicates otherwise.

It will be understood that although the terms "first" and "second" are used to describe various elements, these elements should not be limited by these terms. These terms are only used to distinguish one element from another element. For example, a first element may be named a second element and, similarly, a second element may be named a first element, without departing from the scope of the present disclosure. As used herein, the term "and/or" includes any and all combinations of one or more of the associated listed items. Expressions such as "at least one of," when preceding a list of elements, modify the entire list of elements and do not modify the individual elements of the list.

As used herein, the term "substantially," "about," and similar terms are used as terms of approximation and not as terms of degree, and are intended to account for the inherent deviations in measured or calculated values that would be recognized by those of ordinary skill in the art. Further, if the term "substantially" is used in combination with a feature that could be expressed using a numeric value, the term "substantially" denotes a range of +/-5% of the value centered on the value.

It will be further understood that the terms "include," "comprise," "including," or "comprising" specify a property, a region, a fixed number, a step, a process, an element, a component, and a combination thereof but do not exclude other properties, regions, fixed numbers, steps, processes, elements, components, and combinations thereof.

It will also be understood that when a film, a region, or an element is referred to as being "above" or "on" another film, region, or element, it can be directly on the other film, region, or element, or intervening films, regions, or elements may also be present.

Herein, the terms "upper" and "lower" are defined according to the z-axis. For example, the upper cover is positioned at the upper part of the z-axis, whereas the lower cover is positioned at the lower part thereof. In the drawings, the sizes of elements may be exaggerated for clarity. For example, in the drawings, the size or thickness of each element may be arbitrarily shown for illustrative purposes, and thus the embodiments of the present disclosure should not be construed as being limited thereto.

In the following description of embodiments of the present disclosure, the terms of a singular form may include plural forms unless the context clearly indicates otherwise.

Unless otherwise defined, all terms (including technical and scientific terms) used herein have the same meaning as commonly understood by one of ordinary skill in the art to which the present disclosure belongs. It will be further understood that terms, such as those defined in commonly used dictionaries, should be interpreted as having a meaning that is consistent with their meaning in the context of the relevant art and/or the present specification, and should not be interpreted in an idealized or overly formal sense, unless expressly so defined herein.

### General Concept

According to one aspect of the present disclosure, a battery cell is provided. The battery cell includes a battery cell housing and a protective cover. The battery cell housing has a pair of electrode terminals and a venting valve disposed on a terminal side, e.g. on a top side of the battery cell housing with respect to a z-axis. The venting valve may be disposed between the electrode terminals. The protective cover is configured to cover the terminal side, e.g. to entirely cover the terminal side. Further, the protective cover is configured to be folded to further cover two opposite side walls of the battery cell housing extending from the terminal side to an extent of at least 25 percent of the area of each opposite side wall. For example, opposite end sections of the protective cover may extend beyond opposite ends or edges of the terminal side when the protective cover is disposed on the terminal side and may be folded along a folding line corresponding to the edge(s) of terminal side of the battery cell housing to cover the respective opposite side walls of the battery cell housing. The protective cover has a heat resistance of at least 800°C. For example, the protective cover may have a heat resistance of at least 1000°C.

In other words, the protective cover is configured such that it has a very low thermal conductivity to block heat transfer from hot venting gas and particles towards the battery cell housing during an event of a thermal runaway. In general, only the bottom side of the battery cell where it is mounted towards the chassis is substantially covered in terms of high thermal protection during a thermal runaway such that the sidewalls and the top side, i.e. the terminal side, are usually uncovered in terms of high thermal protection, i.e. against temperatures exceeding 700°C. The presently disclosed protective cover provides the required high thermal protection to the terminal side, where the hot vented gas exhaust from the venting valve in case of a thermal runaway, and to adjacent side walls of the battery cell housing. Advantageously, the incidence of a thermal runaway of the battery cell may be reduced.

The protective cover may be integrally formed, i.e. may be implemented as a single unit, such as a sheet which is foldable along the (predetermined) folding lines corresponding to the respective shape of the battery cell. In order to facilitate folding of the protective cover, the protective cover may be pre-machined, e.g. weakened or slightly pre-bent, in areas corresponding to the folding lines. For example, the protective cover may be a sheet or a stripe extending along the terminal side, wherein the opposite ends may be folded to extend along the opposite sidewalls of the battery cell housing. The stripe may be designed to correspond or match the dimensions of the terminal side so as to entirely cover the terminal side and/or to only extend beyond the terminal side with respect to the two opposite side walls. In other words, the protective cover may be configured to only cover the terminal side and the two side walls. Using a foldable one-piece protective cover significantly facilitates the manufacturing of the battery cell. That is, the single sheet folded over three adjacent sides of the battery cell is easy to assemble and is overall much tighter on the battery cell surface compared to individual sheets for each side of the battery cell housing.

According to one embodiment, the protective cover may be configured to be folded to cover both opposite side walls of the battery cell housing to an extent of at least 50 percent or at least 75 percent of the area of each opposite side wall. Alternatively, the protective cover may be configured to be folded to entirely cover both opposite side walls of the battery cell housing. The more area of the side walls being covered by the protective cover, the better the protection of the battery cell with respect to the high temperatures occurring during a thermal runaway event may become, while the additional cost thereof with regard to manufacturing effort is relatively small. In other words, in order to increase the area of the side walls of the battery cell housing to be covered, it is only required to increase the length of the protective cover, e.g. the stripe or the sheet.

According to another embodiment, the battery cell housing may have a rectangular (or prismatic) shape and the protective cover may be configured to be folded so as to cover short side walls of the prismatic battery cell housing. The prismatic battery cell housing has a rectangular shape, i.e. two parallel long sides and two parallel short sides extending orthogonally to the long sides. The rectangular shape makes it possible to efficiently stack multiple battery cells in a battery module, e.g., vis-a-vis with the long sides. Therefore, prismatic battery cells are well-suited for energy-intensive applications and are commonly used in energy storage systems and electric vehicles. As the prismatic battery cells are usually stacked adjacent with each other with their long sides being arranged next to each other, the long sides of the prismatic battery cell housing require less high thermal protection since it is less likely that the long sides come into contact with hot vented gas ejected from the venting valve in the case of the thermal runaway. However, the short side walls as well as the terminal side of the prismatic battery cell housing are likely to be exposed to the ejected hot vented gas. Therefore, the opposite side walls of the battery cell housing may refer to the short sides of the prismatic battery cell housing, thereby providing high temperature protection and reducing the incidence of a thermal runaway event of the battery cell.

According to another embodiment, the protective cover may be configured to break by venting products exhausted through the venting valve during a thermal runaway of the battery cell. In other words, the protective cover may be configured to be fragile enough to break at a predetermined breaking point and to be sturdy enough to remain stuck to the battery cell housing at sections otherwise than the predetermined breaking point. The protective cover may be configured to break in a section corresponding to the venting valve. For example, the predetermined breaking point may be located at a section of the protective cover corresponding to the venting valve, when the protective cover is disposed on the terminal side of the battery cell housing. Accordingly, a venting concept for the battery cell may be realized, e.g. by letting the venting gas stream discharged by the battery cell to expand through the broken protective cover and escape to the outside (e.g. to the environment of the battery housing).

According to another embodiment, the protective cover may include a weakened portion to facilitate breaking in an area corresponding to the venting valve. The weakened portion may be a pre-cut portion of the protective cover. For example, the weakened portion may include a plurality of holes, a scratch and/or a crack. Due to the weakened portion, a predetermined breaking or tearing of the protective cover may be facilitated during the hot vented gas ejected by the venting valve during a case of a thermal runaway.

According to another embodiment, the battery cell housing may be electrically conductive and the protective cover may be (configured to be further) electrically insulating. The battery cell housing may be made of metal or a metal alloy, e.g. aluminum or an aluminum alloy, to provide rigidity as well as a low weight of the battery cell housing. For electrically conductive battery cell housing, usually isolation foil is disposed on top of the battery cell housing to ensure electrical insulation. However, the insulation foil commonly used is not thermally robust enough to provide insulation at high temperatures exceeding 700°C during a thermal runaway event. In contrast, the use of the protective cover provides high thermal protection as well as electrical insulation such that the insulation foil may be omitted and substituted by the protective cover as presently disclosed. Accordingly, costs and space may be saved.

According to another embodiment, the protective cover may be adhered, e.g. directly adhered, to the battery cell housing. The protective cover may be adhered to the terminals side and/or both opposite side walls of the battery cell housing. For example, protective cover may be adhered to the terminals side and/or both opposite side walls of the battery cell housing along its entire contacting surface with the terminal side and/or the both opposite side walls of the battery cell housing. Accordingly, the battery cell may be easily manufactured and the protective cover may be efficiently kept attached to the battery cell housing. The protective cover may be left blank of adhesion material in a section corresponding to the venting valve to facilitate breaking or tearing thereof when hot vented gas ejects out of the venting valve.

According to another embodiment, the protective cover may include a self-adhering base layer for adhering the protective cover to the battery cell housing and a protective layer adhered to the base layer. In other words, the base layer may be disposed on, e.g. directly on, the battery cell housing and the protective layer may be disposed on, e.g. directly on, the base layer. The base layer may be made of or include polyurethane (PU). Using a self-adhering base layer significantly facilitates the manufacturing of the battery cell, while providing an easy way of predetermining where to arrange adhesive with respect to the base layer.

According to another embodiment, the protective layer includes glass fiber and mica, e.g. mica flakes. The use of mica, i.e. mica silicate minerals, and glass fiber provides high heat resistance, e.g. a heat resistance to temperatures exceeding 700°C, 800 °C and/or 1000°C, and the required foldability as well.

The present disclosure also pertains to a battery system including a battery pack with a housing and a plurality of battery cells as disclosed herein stacked along a stacking direction and accommodated within the housing. A bottom side of each battery cell opposite the terminal side may be covered by a cooling member of the battery system, e.g. a cooling plate. For example, the entire areas of both sides of each of the battery cells of the plurality of battery cells may be (entirely) covered by the protective cover. The features and advantages described in view of the above-mentioned battery cell may be analogously applied to the battery system.

According to another embodiment, the battery system may further include a cell spacer arranged between two adjacent battery cells along the stacking direction. For example, a cell spacer may be arranged between every two adjacent battery cells along the stacking direction. The or each of the cell spacers may be configured to entirely cover the respective side walls of the adjacent battery cells facing each other along the stacking direction so as to abut the protective cover. For example, the cell spacer may have a predetermined elasticity such that the cell spacer may have a different thickness along the stacking direction and extension in a plane orthogonal to the stacking direction based on whether the cell space is arranged between adjacent battery cells or not. In other words, during manufacturing of the battery pack, the battery cells are stacked along the stacking direction and pressed together, e.g. clamped, along the stacking direction. In the compressed state, the cell spacer may be configured to entirely cover the side walls of the adjacent battery cells facing each other along the stacking direction so as to abut the protective cover. In the non-compressed state, i.e. in a non-stacked-configuration, the cell spacer may only be configured to partially cover the side walls. For example, the cell spacer may include or consist of aerogel or another appropriate foam material. As the cell spacer abuts the protective cover in the compressed-state, which is the use state of the battery system, a tight protection against hot vented gas is ensured.

According to another embodiment, the cell spacer(s) may be configured to further overlap the protective cover along the stacking direction and/or to extend beyond the protective cover, e.g. only in in the compressed state. Accordingly, the cell spacer may not only be clamped between the battery cell housings but also between the protective covers such that an exceptionally tight protection against hot vented gas may be achieved. For example, the cell spacer(s) may protrude beyond the outside of the protective cover by up to 0.5 mm on the terminals side and/or up to 1 mm beyond the opposite side walls of the battery cell housing. The protrusion further enhances the protection against hot vented gas.

According to another embodiment, the terminal sides of the battery cells may be arranged to face a first direction orthogonal to the stacking direction and the opposite side walls of the battery cell housings of the battery cells may be arranged to face a second direction orthogonal to the first direction and the stacking direction. In other words, each protective cover may extend along the terminal side and the opposite outer side walls extending from the terminal side of the battery cell, e.g. the short side walls of the battery cell housing, to provide protection to the otherwise unprotected side sections of the battery cell pack.

Further, the invention pertains to an electric vehicle including the battery system as disclosed herein. The features and advantages described in view of the above-mentioned battery system may be analogously applied to the electric vehicle.

Further, the present disclosure pertains to a method for manufacturing a battery cell, namely the battery cell disclosed herein. The features and advantages described in view of the above-mentioned battery cell may be analogously applied to the method of manufacturing the battery cell.

According to one step of the method, a battery cell housing having a pair of electrode terminals and a venting valve disposed on a terminal side of the battery cell is provided.

According to another step of the method, a protective cover with a heat resistance of at least 800°C is disposed on the terminal side of the battery cell housing.

According to another step, two opposite end sections of the protective cover are folded along the edges of the battery cell housing to partially cover two opposite side walls of the battery cell housing extending from the terminal side to an extent of at least 25 percent of the area of each of the opposite side walls.

Further, the present disclosure pertains to a method for manufacturing a battery system, namely the battery system disclosed herein. The features and advantages described in view of the above-mentioned battery system may be analogously applied to the method of manufacturing the battery system.

According to one step of the method, a battery pack including a housing is provided and a plurality of battery cell housings each having a pair of electrode terminals and a venting valve disposed on a terminal side of the battery cell stacked along a stacking direction is accommodated within the housing.

According to another step of the method, a protective cover with a heat resistance of at least 800°C is disposed on the terminal side of each of the battery cell housing, respectively.

According to another step, two opposite end sections of each of the protective covers are folded along the edges of the battery cell housing to partially cover two opposite side walls of each of the battery cell housings extending from the terminal side to an extent of at least 25 percent of the area of each of the opposite side walls, respectively.

### Specific Embodiments

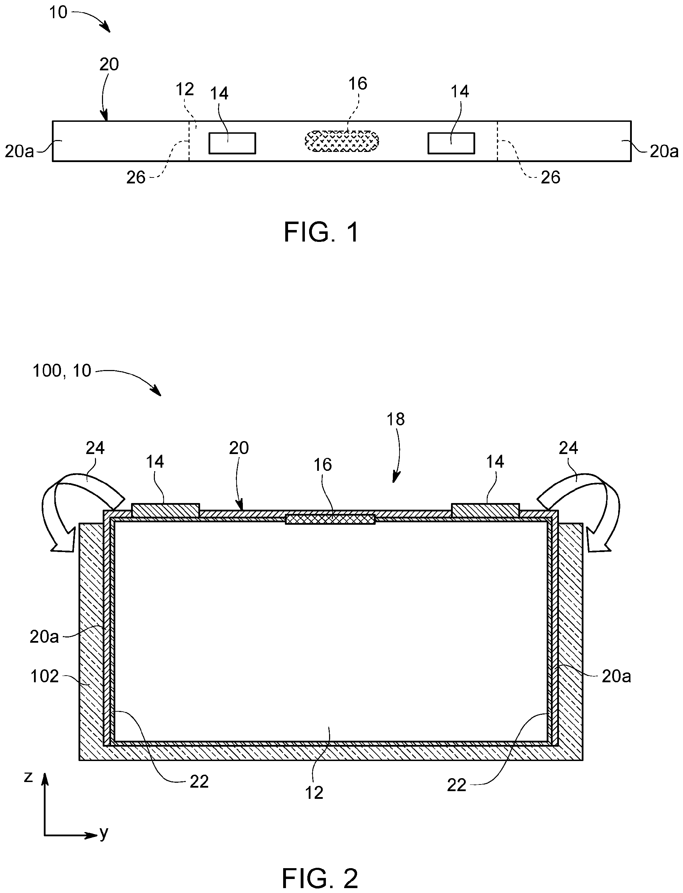

Fig 1 illustrates a top view of a battery cell 10 according to an embodiment. The battery cell 10 is protected against high temperatures such that the incidence of a thermal runaway of the battery cell may be reduced.

The battery cell 10 includes a battery cell housing 12 having a rectangular (or prismatic) shape and a protective cover 20. The battery cell housing 12 has a pair of electrode terminals 14 and a venting valve 16 disposed on a terminal side 18, i.e. a top side of the battery cell 10 (cf. Fig. 2) and a rectangular shape, i.e. two parallel long sides and two parallel short sides arranged orthogonally to the long sides and extending from the terminal side 18. Although the battery cell 10 is illustrated as a prismatic battery cell 10, the battery cell 10 is not limited to the shape and may be of any other kind of shape. The protective cover 20 has a heat resistance of at least 800°C to provide high temperature protection against the temperatures occurring when hot vented gas is ejected through the venting valve 16 during a thermal runaway event.

As shown in Fig. 1, the protective cover 20 is configured to entirely cover the terminal side 18. The protective cover 20 has cutouts corresponding to the pair of electrode terminals 14. In the section corresponding to venting valve 16, the protective cover 20 is weakened in order to break by venting products exhausted through the venting valve 16 during a thermal runaway of the battery cell 10. Further, the protective cover 20 includes two opposite end sections 20a extending beyond opposite ends of the terminal side 18. The protective cover 20 is configured to be folded at folding lines 26 located at the edges of the opposite ends of the terminal side 18. In other words, the protective cover 20 is configured to be folded at the folding lines 26 by substantially 90 degree to further cover the corresponding two opposite side walls 22 (cf. Fig. 2) of the battery cell housing 12 extending from the terminal side 18 to an extent of at least 25 percent of the area of each opposite side wall 22. For example, the protective cover 20 is configured to be folded to entirely cover both opposite side walls 22 of the battery cell housing 12 (cf. Fig. 2). In Fig. 1, the protective cover 20 is shown in an unfolded state on the terminal side 18 for ease of illustration. The folding operation of the protective cover 20 is also indicated by arrows in Fig. 2 referring to the respective folding directions 24 of the opposite end sections 20a of the protective cover 20.

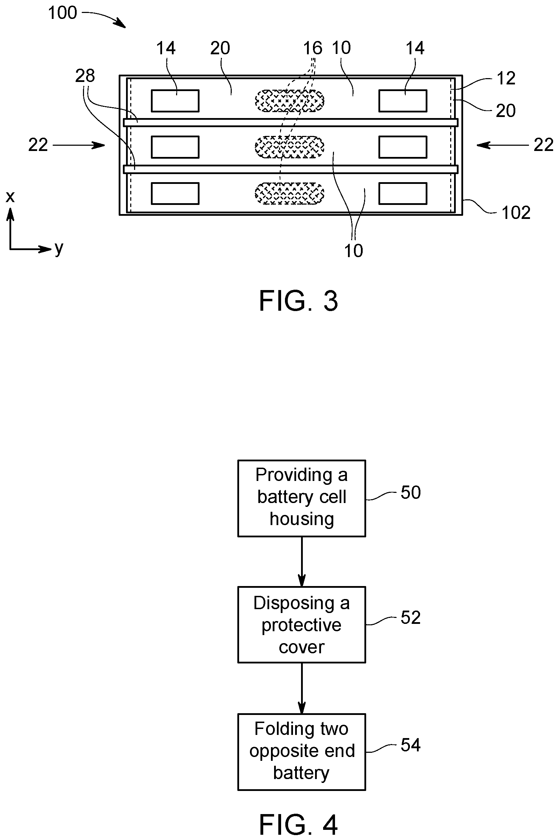

As shown in Figs. 1 and 2, the opposite side walls 22 of the battery cell housing 12 refer to short side walls 22 of the battery cell housing 12. Accordingly, the entire outer surfaces of the terminal side 18 and the short side walls 22 of the battery cell housing 12 are covered by the protective cover 20. Protecting the short side walls 22 and the terminal side 18 from high temperatures occurring during a thermal runaway event is effective in the case of a stacked configuration as described in view of Figs. 2 and 3.

Figs. 2 and 3 show a battery system 100 according to an embodiment. Specifically, Fig. 2 illustrates a schematic cross section of the battery system 100 and Fig. 3 depicts a top view of the battery system 100 of Fig. 2.

The battery system 100 includes a battery pack with a housing 102 and a plurality of battery cells 10 accommodated within the housing 102. The battery cells 10 correspond to the battery cell 10 as described in view of Fig. 1. The plurality of battery cells 10 may include two, three, four, five or any other number of battery cells 10 as desired for a particular design. A bottom side of each battery cell 10 opposite the terminal side 18 is covered by a cooling plate (not shown) of the battery system 100.

As shown in Fig. 3, the plurality of battery cells 10 is efficiently stacked vis-à-vis with their long sides along a stacking direction x. Due to the stacked arrangement, the long sides of the battery cell housings 12 may require less high thermal protection since it is less likely that the long sides come into contact with hot vented gas ejected from the venting valve 16 in the case of the thermal runaway. However, the short side walls 22 facing a second direction y orthogonal to the stacking direction x as well as the terminal side 18 of the battery cell housing 12 are likely to be exposed to the ejected hot vented gas. Since each protective cover 20 extends along the terminal side 18 and the opposite outer short side walls 22 extending from the terminal side 18 of the battery cell 10, protection to the otherwise unprotected sections of the battery cell housings 12 is provided.

As further shown in Fig. 3, the battery system 100 includes cell spacers 28 arranged between adjacent battery cells 10 along the stacking direction x. One cell spacer 28 is arranged between every two adjacent battery cells 10 along the stacking direction x. Each of the cell spacers 28 entirely covers the respective surfaces of the long side walls of the adjacent battery cells 10 facing each other along the stacking direction x so as to overlap the protective cover 20 along the stacking direction x and to extend beyond the protective cover 20 (see left and right ends of the cell spacer 28 in Fig. 3). Accordingly, the cell spacers 28 are clamped between adjacent battery cell housings 12 as well as between the adjacent protective covers 20 such that an exceptionally tight protection against hot vented gas may be achieved. For example, each of the cell spacers 28 protrudes beyond the outside of the protective cover 20 by up to 0.5 mm on the terminals side 18 (along a first direction, i.e. towards the top side of the battery systems 100, not shown) and up to 1 mm beyond the opposite short side walls 22 of the battery cell housing 12 along the second direction y. For example, the cell spacer 28 includes aerogel. Aerogel is a heat resistant material providing in the described configuration a tight protection against hot vented gas. However, the invention is not limited thereto and the cell spacers 28 may also be omitted.

The battery system 100, as described in view of Figs. 2 and 3, can be used to power an electric vehicle (not shown).

Figure 4 illustrates a schematic flow chart of a method for assembling a battery cell 10 according to an embodiment. The battery cell 10 may be the battery cell 10 used in the battery system 100 of Figs. 2 and 3. The features and advantages described in view of the above-mentioned battery cells 10 may be analogously applied to the method of manufacturing the battery cell 10.

According to a first step 50 of the method, a battery cell housing 12 having a pair of electrode terminals 14 and a venting valve 16 disposed on a terminal side 18 of the battery cell 10 is provided.

According to a second step 52 of the method, a protective cover 20 with a heat resistance of at least 800°C is disposed on the terminal side 18 of the battery cell housing 12.

According to a third step 54, two opposite end sections 20a of the protective cover 20 are folded along the edges of the battery cell housing 12 to partially cover two opposite side walls 22 of the battery cell housing 12 extending from the terminal side 18 to an extent of at least 25 percent of the area of each of the opposite side walls 22.

### Reference signs

- 10: battery cell
- 12: battery cell housing
- 14: pair of electrodes
- 16: venting valve
- 18: terminal side
- 20: protective cover
- 20a: end section
- 22: opposite side walls
- 24: folding directions
- 26: folding lines
- 28: cell spacer

- 50: first step of providing a battery cell housing
- 52: second step of disposing a protective cover
- 54: third step of folding two opposite end sections

- 100: battery system
- 102: housing

- x: stacking direction
- y: second direction

## Claims

1. A battery cell (10), comprising:
a battery cell housing (12) having a pair of electrode terminals (14) and a venting valve (16) disposed on a terminal side (18), and
a protective cover (20) configured to cover the terminal side (18) and to be folded to further cover two opposite side walls (22) of the battery cell housing (12) extending from the terminal side (18) to an extent of at least 25 percent of the area of each opposite side wall (22),
wherein the protective cover (20) has a heat resistance of at least 800°C.

2. The battery cell (10) as claimed in claim 1, wherein
the protective cover (20) is configured to be folded to cover both opposite side walls (22) of the battery cell housing (12) to an extent of at least 50 percent or at least 75 percent of the area of each opposite side wall (22), or
wherein the protective cover (20) is configured to be folded to entirely cover both opposite side walls (22) of the battery cell housing (12).

3. The battery cell (10) as claimed in any one of the preceding claims, wherein
the battery cell housing (12) has a rectangular shape, and
wherein the protective cover (20) is configured to be folded so as to cover short side walls (22) of the battery cell housing (12).

4. The battery cell (10) as claimed in any one of the preceding claims, wherein the protective cover (20) is configured to break by venting products exhausted through the venting valve (16) during a thermal runaway of the battery cell (10).

5. The battery cell (10) as claimed in claim 4, wherein the protective cover (20) comprises a weakened portion to facilitate breaking in an area corresponding to the venting valve (16).

6. The battery cell (10) as claimed in any one of the preceding claims, wherein the battery cell housing (12) is electrically conductive and the protective cover (20) is electrically insulating.

7. The battery cell (10) as claimed in any one of the preceding claims, wherein the protective cover (20) is adhered to the battery cell housing (12).

8. The battery cell (10) as claimed in any one of the preceding claims, wherein the protective cover (20) comprises a self-adhering base layer for adhering the protective cover (20) to the battery cell housing (12) and a protective layer adhered to the base layer.

9. The battery cell (10) as claimed in claim 8, wherein the protective layer comprises glass fiber and mica.

10. A battery system (100), comprising:
a battery pack comprising a housing (102) and a plurality of battery cells (10) as claimed in any one of the preceding claims stacked along a stacking direction (x) and
accommodated within the housing (102).

11. The battery system (100) as claimed in claim 10 further comprising a cell spacer (28) arranged between two adjacent battery cells (10) along the stacking direction (x), wherein the cell spacer (28) is configured to entirely cover the side walls of the adjacent battery cells (10) facing each other along the stacking direction (x) so as to abut the protective cover (20).

12. The battery system (100) as claimed in claim 11, wherein the cell spacer (28) is configured to further overlap the protective cover (20) along the stacking direction (x) and/or to extend beyond the protective cover (20).

13. The battery system (100) as claimed in any one of claims 10 to 12, wherein the terminal sides (18) of the battery cells (10) are arranged to face a first direction orthogonal to the stacking direction (x) and the opposite side walls (22) of the battery cell housings (12) of the battery cells (10) are arranged to face a second direction (y) orthogonal to the first direction and the stacking direction (x).

14. An electric vehicle including the battery system (100) as claimed in any one of claims 10 to 13.

15. A method for manufacturing a battery cell (10), wherein the method comprises the steps of:
a) providing (50) a battery cell housing (12) having a pair of electrode terminals (14) and a venting valve (16) disposed on a terminal side (18) of the battery cell (10);
b) disposing (52) a protective cover (20) with a heat resistance of at least 800°C on the terminal side (18) of the battery cell housing (12); and
c) folding (54) two opposite end sections of the protective cover (20) along the edges of the battery cell housing (12) to partially cover two opposite side walls (22) of the battery cell housing (12) extending from the terminal side (18) to an extent of at least 25 percent of the area of each of the opposite side walls (22).

## Amended claims

### Amended claims in accordance with Rule 137(2) EPC.

1. A battery cell (10), comprising:
a battery cell housing (12) having a pair of electrode terminals (14) and a venting valve (16) disposed on a terminal side (18), and
a protective cover (20) configured to cover the terminal side (18) and to be folded to further cover two opposite side walls (22) of the battery cell housing (12) extending from the terminal side (18) to an extent of at least 25 percent of the area of each opposite side wall (22),
wherein the protective cover (20) is configured to break by venting products exhausted through the venting valve (16) during a thermal runaway of the battery cell (10) and has a heat resistance of at least 800°C.

2. The battery cell (10) as claimed in claim 1, wherein
the protective cover (20) is configured to be folded to cover both opposite side walls (22) of the battery cell housing (12) to an extent of at least 50 percent or at least 75 percent of the area of each opposite side wall (22), or
wherein the protective cover (20) is configured to be folded to entirely cover both opposite side walls (22) of the battery cell housing (12).

3. The battery cell (10) as claimed in any one of the preceding claims, wherein
the battery cell housing (12) has a rectangular shape, and
wherein the protective cover (20) is configured to be folded so as to cover short side walls (22) of the battery cell housing (12).

4. The battery cell (10) as claimed in claim 1, wherein the protective cover (20) comprises a weakened portion to facilitate breaking in an area corresponding to the venting valve (16).

5. The battery cell (10) as claimed in any one of the preceding claims, wherein the battery cell housing (12) is electrically conductive and the protective cover (20) is electrically insulating.

6. The battery cell (10) as claimed in any one of the preceding claims, wherein the protective cover (20) is adhered to the battery cell housing (12).

7. The battery cell (10) as claimed in any one of the preceding claims, wherein the protective cover (20) comprises a self-adhering base layer for adhering the protective cover (20) to the battery cell housing (12) and a protective layer adhered to the base layer.

8. The battery cell (10) as claimed in claim 7, wherein the protective layer comprises glass fiber and mica.

9. A battery system (100), comprising:
a battery pack comprising a housing (102) and a plurality of battery cells (10) as claimed in any one of the preceding claims stacked along a stacking direction (x) and accommodated within the housing (102).

10. The battery system (100) as claimed in claim 9 further comprising a cell spacer (28) arranged between two adjacent battery cells (10) along the stacking direction (x), wherein the cell spacer (28) is configured to entirely cover the side walls of the adjacent battery cells (10) facing each other along the stacking direction (x) so as to abut the protective cover (20).

11. The battery system (100) as claimed in claim 10, wherein the cell spacer (28) is configured to further overlap the protective cover (20) along the stacking direction (x) and/or to extend beyond the protective cover (20).

12. The battery system (100) as claimed in any one of claims 9 to 11, wherein the terminal sides (18) of the battery cells (10) are arranged to face a first direction orthogonal to the stacking direction (x) and the opposite side walls (22) of the battery cell housings (12) of the battery cells (10) are arranged to face a second direction (y) orthogonal to the first direction and the stacking direction (x).

13. An electric vehicle including the battery system (100) as claimed in any one of claims 9 to 12.

14. A method for manufacturing a battery cell (10), wherein the method comprises the steps of:
a) providing (50) a battery cell housing (12) having a pair of electrode terminals (14) and a venting valve (16) disposed on a terminal side (18) of the battery cell (10);
b) disposing (52) a protective cover (20) configured to break by venting products exhausted through the venting valve (16) during a thermal runaway of the battery cell (10) with a heat resistance of at least 800°C on the terminal side (18) of the battery cell housing (12); and
c) folding (54) two opposite end sections of the protective cover (20) along the edges of the battery cell housing (12) to partially cover two opposite side walls (22) of the battery cell housing (12) extending from the terminal side (18) to an extent of at least 25 percent of the area of each of the opposite side walls (22).
